Europäisches Patentamt

European Patent Office

Office européen des brevets

(11) Publication number: **0 089 051**
**B1**

(12) **EUROPEAN PATENT SPECIFICATION**

(45) Date of publication of patent specification: **02.12.87**

(51) Int. Cl.⁴: **F 16 L 1/04, E 02 D 5/60**

(21) Application number: **83102507.7**

(22) Date of filing: **14.03.83**

(54) **Self-disintegrating formwork.**

(30) Priority: **17.03.82 NO 820884**

(43) Date of publication of application:
**21.09.83 Bulletin 83/38**

(45) Publication of the grant of the patent:
**02.12.87 Bulletin 87/49**

(84) Designated Contracting States:
**BE FR GB IT NL**

(56) References cited:
**FR-A-2 464 350**
**US-A-4 103 505**

(73) Proprietor: **NORSK HYDRO A/S**
**Bygdoy Allé 2**
**N-0257 Oslo 2 (NO)**

(72) Inventor: **Alveberg, Bjorn-Erik**
**Maltrostvn. 9**
**Oslo 3 (NO)**
Inventor: **Teigum, Erling**
**Skrivervn. 18**
**N-2200 Kongsvinger (NO)**
Inventor: **Kittilsen, Bjorn**
**Tarnfjellvn. 33**
**N-3900 Porsgrunn (NO)**

(74) Representative: **Wilhelms, Rolf E., Dr. et al**
**WILHELMS, KILIAN & PARTNER Patentanwälte**
**Eduard-Schmid-Strasse 2**
**D-8000 München 90 (DE)**

Courier Press, Leamington Spa, England.

## Description

The invention concerns a formwork for casting of submerged constructions and use of such formworks.

In practice such constructions are cast joint sections on sub-aqueous steel pipelines, nowadays used for transport of oil and gas from offshore oil fields, e.g. in the North Sea. The lines are composed of steel pipe elements, approx. length of 12 m, with an outer protective concrete layer (weight coating). The steel pipe ends on each pipe section are without concrete coating in order to allow for welding connection of the pipes. For protection of the steel pipes along the welded parts a fluid asphalt mass is poured in the formworks built around the welding zone to encase the fluid mass until it solidifies. Steel sheets, approx. 1 mm thick, are used in this formwork and the formwork follows the pipeline to the sea bottom. The steel plates are manually bent, the work is time-consuming and cumbersome. Under the prevailing conditions on board the barges, with high sea and gusts of wind, the work implies certain risks for the operators.

Furthermore, the corrosion of steel plates is uneven and too slow, so that the plate remains cause damages to fishing equipment (trawl/net), which is teared to pieces. The use of steel plates is therefore forbidden in certain territorial waters.

Alternative materials such as cardboard, heat shrink plastic etc. have been unsuccessfully tested so far. The materials fail either with regard to minimal required mechanical strength and density or they do not satisfy the environmental requirements. The conducted tests have also shown that it takes relatively long time to raise these alternative formworks.

FR—A—2 464 350 discloses in a general manner the use of self-destructing or bio-degradable formwork in civil engineering in the sea. As materials for such formwork plastics, textiles and bio-organic material is mentioned.

Another example of the submerged construction, where the formwork according to the present invention can advantageously be used, are concrete cast pier walls, bridge pillars etc. The normally applied wooden formworks are quite often not removed after solidification of the cast members because of the costs attended with mechanical removal of formworks, especially in deep waters. The formworks attached to coated constructions hide possible casting defects, represent obstacles for later visual controls of the wearing rate of the constructions and environmental pollution by possible spontaneous self-release of formwork parts.

It is therefore the object of the present invention to provide a new type of formwork, which ensure a speedy and controlled corrosion process of the formwork material, so that the formwork is self-disintegrating and dissolves in sea water within a few weeks after its applying without any need for mechanical dismantling.

Another object is to present a handy formwork without risk of any damages to operators or the equipment and which reduces the necessary time to raise the formwork.

Still another object of the invention is to provide light weight formwork which will reduce transport and storage costs and facilitate the handling of the formwork.

These and other objects and advantages of the invention will be apparent from the following description with example, and are obtained by the formwork disclosed and claimed herein.

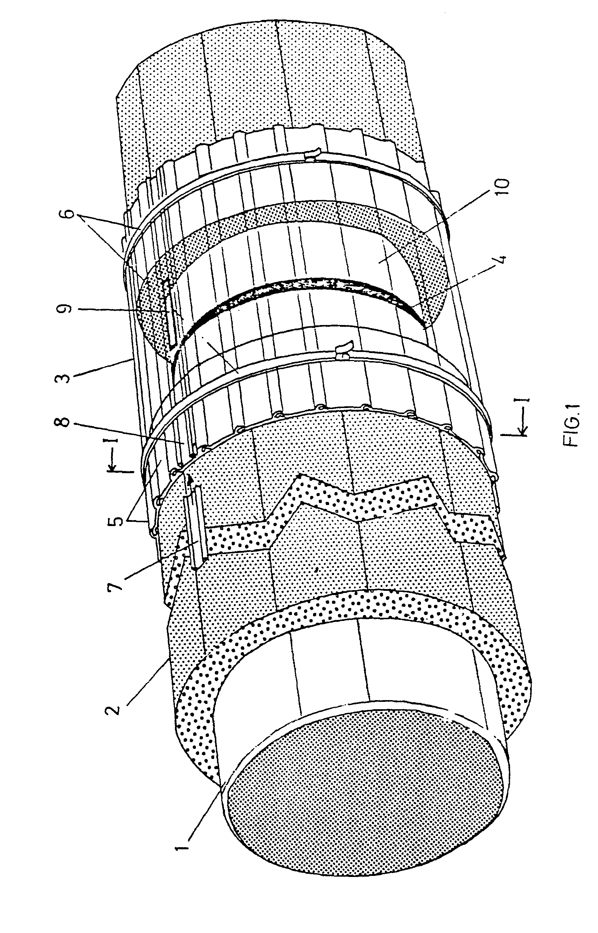

The invention is illustrated by the accompanying drawing, Fig. 1, which is a schematic view of the formwork attached to welded pipe sections and shows the construction and function of the formwork.

In Fig. 1 denominates (1), respectively (10), two pipes connected together by means of a weld (4). The pipes (1, 10) are protected by a concrete coating (2), which besides its protecting function also act as weight coating for pipelines placed on the sea bottom. The formwork (3) is composed of interlockable segments (5) which by bridging the concrete coatings forms a cavity which prior to the pipe laying is filled with a special asphalt based mass (mastic).

A special formed profile (8), provided with aperture (9), is one practical design solution in order to fill the cavity with the mastic. After end of the filling operation a complementary formed profile section (7) is inserted along the profile (8) and covers the aperture (9). Two straps (6) of magnesium strips, as shown in the Figure, are applied in order to safeguard the formwork against sliding during the mass filling and the following laying of the pipeline. The respective profile ends are designed as a projection part and a complementary shaped groove for a quick installation/assembling of the base profiles. The profiles are manufactured with relatively large tolerances in order to facilitate the insertion of the projections in the grooves. It is also achieved a certain flexibility with regard to adaption of the formwork to variations in the concrete coatings thickness, uneven surface etc. since the connection allows for a few grades swinging around the longitudinal axis of the profiles.

Furthermore, this special design of the projection and groove parts ensures that all mechanical impacts from surroundings, such as strokes/ pressure from rollers during the pipe laying, have locking effect on the connection because a plastic deformation of the thin-walled profiles find place.

The special combination of various requirements to the formwork material, such as a certain minimum strength in order to cope with the weight of the filling mass and mechanical strain during the pipelaying, together with the necessity of a quick disintegration and dissolving of the material in sea water eliminates today most of the known and considered materials.

An optimal ratio between corrosion rate (material choice) and mechanical strength of the profiles (design, dimensions) has been found based upon tests carried out with different types of magnesium and magnesium alloys.

Example
   Corrosion properties to:
   A. Technical pure Mg (99.8% Mg, rest impurities)
   B. Mg-alloy, type ZM 21 (2% Zn, 1% Mn)
   C. Mg-alloy, type AZ 91 (9% Al, 1% Zn)
have been tested on samples put in sea water with Cl⁻ concentration of 15.5 g/l with results as follows:

| Alloy type | Corrosion rate (mm/day) |
|---|---|
| A | 0.33 |
| B | 0.0033 |
| C | 0.008 |

The most corrosive among these three is technical pure magnesium. Alloying of magnesium with Zn, Al and Mn, besides of increase of materials strength, results also in possibility to achieve an exact adjusted and controlled progress of the disintegration process.

The profiles have been manufactured with variable wall thickness from 1.0 to 2.0 mm. The profiles width has been variated in order to optimalize the formwork system. The total weight of the filling mass with specific density of 2 kg/l will depend on the diameter of the steel pipes and the thickness of the concrete coating. The weight with the standard applied diameters will be between 200 and 400 kg.

The formwork, as shown in the Fig. 1 and described above, shows only one preferred embodiment of the invention as commonly applied. Other arrangements of the lock principle to join the segments in the formwork than the two shown in the figure are possible within the scope of the invention. For example so-called clips principle is one alternative which could be applied even if more strict requirements to tolerances will be demanded and furthermore, one will lose the flexibility of the joints and adjustment possibilities which characterize the shown lock systems in the figures. Profiled plates (sheets) instead of the shown extruded profiles can also be used.

The strict requirements with regard to the disintegration and disappearance of the formwork within few weeks after the pipe laying eliminates in the first place application of other materials than the tested magnesium and its alloys. Less strict rules and lower requirements with regard to disintegration time can favour application of cheaper dissoluble materials, e.g. Al or Zn in the casting of concrete submerged constructions.

## Claims

1. Formwork for casting of submerged constructions, self-disintegrating in sea water, characterized in that the formwork has a high corrosion rate and that it comprises one or more interlockable segments made of dissoluble materials.

2. Formwork according to claim 1, characterized in that the interlockable segments (5) are made of dissoluble metals or their alloys.

3. Formwork according to claim 2, characterized in that the segments (5) are extruded profiles or profiled plates.

4. Formwork according to claim 1 to 3, characterized in that the segments (5) are made of magnesium or magnesium alloys.

5. Formwork according to claim 1 to 3, characterized in that the segments (5) are made of aluminium or aluminium alloys.

6. Formwork according to claim 1 to 3, characterized in that the segments (5) are made of zinc or zinc alloys.

7. Use of the formwork according to any preceding claims in the pouring of mass applied for protection of welded joint sections on subaqueous pipelines.

## Patentansprüche

1. In Seewasser sich selbst auflösendes Formteil zum Gießen von Unterwasserkonstruktionen, dadurch gekennzeichnet, daß das Formteil eine hohe Korrosionsgeschwindigkeit besitzt und ein oder mehrere miteinander verriegelbare Segmente, die aus löslichen Materialien hergestellt sind, aufweist.

2. Formteil nach Anspruch 1, dadurch gekennzeichnet, daß die miteinander verriegelbaren Segmente (5) aus löslichen Metallen oder ihren Legierungen hergestellt sind.

3. Formteil nach Anspruch 2, dadurch gekennzeichnet, daß die Segmente (5) extrudierte Profile oder Profilplatten sind.

4. Formteil nach Anspruch 1 bis 3, dadurch gekennzeichnet, daß die Segmente (5) aus Magnesium oder Magnesiumlegierungen hergestellt sind.

5. Formteil nach Anspruch 1 bis 3, dadurch gekennzeichnet, daß die Segmente (5) aus Aluminium oder Aluminiumlegierungen hergestellt sind.

6. Formteil nach Anspruch 1 bis 3, dadurch gekennzeichnet, daß die Segmente (5) aus Zink oder Zinklegierungen hergestellt sind.

7. Verwendung des Formteils nach einem der vorhergehenden Ansprüche beim Gießen der Schutzmasse für geschweißte Verbindungsbereiche bei Unterwasser-Pipelines.

## Revendications

1. Coffrage pour le moulage de constructions submergées, auto-désintégrant dans l'eau de mer, caractérisé en ce que le coffrage possède une grande vitesse de corrosion et en ce qu'il comporte un ou plusieurs segments verrouillables entre eux en matériau dissoluble.

2. Coffrage selon la revendication 1, caractérisé en ce que les segments (5) verrouillables entre eux, sont réalisés en métaux dissolubles ou leurs alliages.

3. Coffrage selon la revendication 2, caractérisé en ce que les segments (5) sont des profilés extrudés ou des plaques profilées.

4. Coffrage selon les revendications 1 à 3, caractérisé en ce que les segments (5) sont réalisés en magnésium ou alliage de magnésium.

5. Coffrage selon les revendications 1 à 3, caractérisé en ce que les segments (5) sont réalisés en aluminium ou alliage d'aluminium.

6. Coffrage selon les revendications 1 à 3, caractérisé en ce que les segments (5) sont réalisés en zinc ou alliage de zinc.

7. Utilisation du coffrage selon l'une quelconque des revendications précédentes dans le coulage d'une masse appliquée pour la protection de sections à joint soudé sur des pipelines sous-marins.

FIG.1